# EUROPÄISCHE PATENTANMELDUNG

(11) **EP 0 906 871 A1**
(43) Veröffentlichungstag der Anmeldung: **07.04.1999**
(21) Anmeldenummer: 98115786.0
(22) Anmeldetag: 21.08.1998
(51) Int. Cl.: B65D 77/20, B29C 51/26

(54) **Verfahren zum Herstellen eines Behälters und damit hergestellter Behälter**

(30) Priorität: 23.09.1997 DE 19741882
(71) Anmelder: 4P Rube Göttingen GmbH, D-37077 Göttingen (DE)
(72) Erfinder: Altenburg, Gerd, 37073 Göttingen (DE)
(74) Vertreter: Hutzelmann, Gerhard

(57) **Zusammenfassung**

Verfahren zum Herstellen eines mit einem Siegelrand versehenen Behälters, der aus einer Kunststoff-Folie im Tiefziehverfahren hergestellt wird und innerhalb des Siegelrandes mit einer umlaufenden Erhebung (Siegelwall) versehen wird. In einem ersten Arbeitsschritt werden in die vorher erwärmte Folie zwei parallel zueinander verlaufende Längsnuten eingepreßt und in einem zweiten Arbeitsschritt wird das zwischen den beiden Längsnuten liegende Material in eine umlaufende Erhebung gepreßt wird. Ein Behälter(1), der gemäß diesem Verfahren hergestellt ist, weist in seinem Siegelrand(3) eine umlaufende Erhebung(6) aufweist, die von zwei ebenfalls umlaufenden Längsnuten(4,5) begrenzt ist.

## Beschreibung

Die Erfindung bezieht sich auf ein Verfahren zum Herstellen eines mit einem Siegelrand versehenen Behälters, der aus einer Kunststoff-Folie im Tiefziehverfahren hergestellt wird und innerhalb des Siegelrandes mit einer umlaufenden Erhebung (Siegelwall) versehen wird.

Aus verschiedenen Gründen ergibt sich die Notwendigkeit auch derartige Behälter fest zu verschließen, was durch Aufsiegeln einer Verschlußmembran geschieht. Bei den heutigen schnell laufenden Abfüllmaschinen steht für den Versiegelungsvorgang lediglich eine Zeitspanne von 0,3 bis 0,5 Sekunden zur Verfügung. Um in dieser kurzen Zeit überhaupt eine sichere Versiegelung durchführen zu können, ist es notwendig besondere Maßnahmen zu treffen.

Hierzu wurde bereits versucht am Siegelrand eine umlaufende Erhebung vorzusehen, wozu der Siegelrand beim Tiefziehen des Behälters in seiner Fläche derart komprimiert wurde, daß das Material in eine umlaufende Erhebung ausweichen konnte.

Dabei wurden aber gleichzeitig an den freien Rändern des Siegelrandes Wulste erzeugt und der Siegelrand selbst stark verdünnt, was nicht sehr vorteilhaft ist. Darüber hinaus ist für diese Herstellung der umlaufenden Erhebung ein sehr hoher Druck erforderlich, da keine Plastifizierung des Materials herbeigeführt werden kann.

Der Erfindung liegt die Aufgabe zugrunde, das Verfahren der eingangs genannten Art so weiterzubilden, daß eine umlaufende Erhebung erzeugt wird, unter Vermeidung der geschilderten Nachteile.

Diese Aufgabe wird erfindunggemäß dadurch gelöst, daß in einem ersten Arbeitsschritt in die vorher erwärmte Folie zwei parallel zueinander angeordnete, umlaufende Längsnuten eingepreßt werden und in einem zweiten Arbeitsschritt das zwischen den beiden Längsnuten liegende Material in eine umlaufende Erhebung gepreßt wird.

Damit wird für die umlaufende Erhebung nahezu ausschließlich das Material aus den beiden Nuten verwendet, so daß der Siegelrand keine wesentliche weitere Verformung erfährt.

Eine vorteilhafte Ausgestaltung des erfindungsgemäßen Verfahrens liegt auch darin, daß die beiden Längsnuten und die umlaufende Erhebung mit einem einzigen Werkzeug in einem einzigen Folgearbeitsgang in den Siegelrand eingepreßt werden.

Hierdurch ist ein besonders rationeller Ablauf des Verfahrens gewährleistet.

Ein aus einer Kunststoff-Folie im Tiefziehverfahren hergestellter Behälter ist gemäß einer vorteilhaften Ausgestaltung der Erfindung dadurch gekennzeichnet, daß der Behälter in seinem Siegelrand eine umlaufende Erhebung aufweist, die von zwei ebenfalls umlaufenden Längsnuten begrenzt ist.

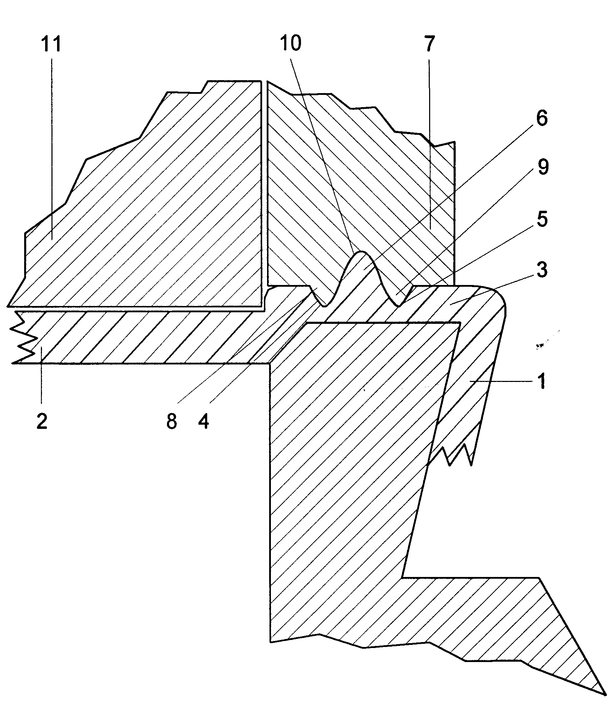

In der Zeichnung ist die Erfindung anhand eines Ausführungsbeispiels veranschaulicht. Dabei zeigt die Figur das Herstellen eines Kunststoff-Behälters in einer Tiefziehvorrichtung.

Mit 1 ist in der Figur die Wand eines aus einer Kunststoff-Folie 2 tiefgezogenen, nicht näher dargestellten Behälters bezeichnet, der einen Siegelrand 3 aufweist.

Innerhalb der Fläche des Siegelrandes 3 sind zwei Nuten 4 und 5 eingeformt, wobei das aus dem Zwischenraum zwischen diesen beiden Nuten herausgedrückte Material in eine Erhebung 6 hineingepreßt ist.

Ein den Siegelrand 3 während des Tiefziehens des Behälters aus der Kunststoff-Folie 2 festklemmendes Werkzeug 7 ist dazu mit zwei um den gesamten Behälter umlaufenden, im Querschnitt im wesentlichen dreieckigen Rippen 8 und 9 versehen. Zwischen diesen beiden Rippen 8,9 ist eine nutartige Vertiefung 10 angeordnet, die ebenfalls umlaufend ausgebildet ist und das von den beiden Rippen 8 und 9 verdrängte Material aus dem Siegelrand 3 aufnimmt. Der Querschnitt dieser nutartigen Vertiefung 10 entspricht dabei annähernd dem Querschnitt der beiden Rippen 8 und 9 zusammen.

Beim Zufahren des Werkzeuges 7 dringen zuerst die beiden Rippen 8 und 9 in den den Siegelrand 3 bildenden Abschnitt der Kunststoff-Folie ein. Beim weiteren Zusammenfahren wird das Material, das zwischen diesen beiden Rippen verdrängt wird, in die nutartige Vertiefung 10 hineigepreßt, so daß eine umlaufende Erhebung 6 erzeugt wird. Auf diese Erhebung 6 wird später in nicht dargestellter Weise ein Deckel aufgesiegelt, wobei die Erhebung wenigstens teilweise wieder zusammengedrückt wird.

Nach dem nicht weiter dargestellten Tiefziehen des Behälters 1 wird dann mit einem Schneidwerkzeug 11 der Behälter aus der Folie 2 herausgetrennt.

## Patentansprüche

1. Verfahren zum Herstellen eines mit einem Siegelrand versehenen Behälters, der aus einer Kunststoff-Folie im Tiefziehverfahren hergestellt wird und innerhalb des Siegelrandes mit einer umlaufenden Erhebung (Siegelwall) versehen wird, **dadurch gekennzeichnet**, daß in einem ersten Arbeitsschritt in die vorher erwärmte Folie zwei parallel zueinander verlaufende Längsnuten eingepreßt werden und in einem zweiten Arbeitsschritt das zwischen den beiden Längsnuten liegende Material in eine umlaufende Erhebung gepreßt wird.

2. Verfahren nach Anspruch 1, **dadurch gekennzeichnet**, daß die beiden Längsnuten und die umlaufende Erhebung mit einem einzigen Werkzeug in einem einzigen Folgearbeitsgang in den Siegelrand eingepreßt werden.

3. Behälter, der aus einer Kunstoff-Folie(2) im Tiefzieh-Verfahren gemäß Anspruch 1 oder 2 hergestellt ist, **dadurch gekennzeichnet,** daß der Behälter(1) in seinem Siegelrand(3) eine umlaufende Erhebung(6) aufweist, die von zwei ebenfalls umlaufenden Längsnuten(4,5) begrenzt ist.
